# EUROPÄISCHE PATENTSCHRIFT

(11) **EP 4 381 697 B1**
(45) Veröffentlichungstag und Bekanntmachung des Hinweises auf die Patenterteilung: **28.05.2025**
(21) Anmeldenummer: 23762503.3
(22) Anmeldetag: 30.08.2023
(51) Int. Cl.: H04L 12/40

(54) **VERFAHREN UND KOMMUNIKATIONS-STEUERGERÄT ZUR DATENÜBERTRAGUNG IN EINEM FAHRZEUG**
METHOD AND COMMUNICATIONS CONTROL DEVICE FOR DATA TRANSMISSION IN A VEHICLE
PROCÉDÉ ET APPAREIL DE COMMANDE DE COMMUNICATION POUR LA TRANSMISSION DE DONNÉES DANS UN VÉHICULE

(30) Priorität: 27.09.2022 DE 102022003531
(43) Veröffentlichungstag der Anmeldung: 12.06.2024
(73) Patentinhaber: Mercedes-Benz Group AG, 70372 Stuttgart (DE)
(72) Erfinder: ECHARD, Jörg, 71065 Sindelfingen (DE); KEPPLER, Martin, 75394 Oberreichenbach (DE)
(74) Vertreter: Novagraaf Group
(86) Internationale Anmeldenummer: PCT/EP2023/073826
(87) Internationale Veröffentlichungsnummer: WO 2024/068176

(56) Entgegenhaltungen:
- US-A1- 2014 071 995
- US-A1- 2019 378 356
- US-A1- 2020 077 278

## Beschreibung

Die Erfindung betrifft ein Verfahren zur Übertragung von Datenpaketen in einem Fahrzeug gemäß dem Oberbegriff des Anspruchs 1. Ferner betrifft die Erfindung ein Kommunikations-Steuergerät für ein Fahrzeug gemäß dem Oberbegriff des Anspruchs 4. Darüber hinaus betrifft die Erfindung eine Anordnung von Komponenten in einem Fahrzeug gemäß dem Oberbegriff des Anspruchs 6.

Ortsgebundene, beispielsweise entlang von Verkehrswegen installierte Datenübertragungseinrichtungen sind für verschiedene Kanäle bekannt, beispielsweise für eine Übertragung von Daten über Ultrakurzwelle (UKW), Mikrowelle oder Infrarotlicht. Mittels dieser Datenübertragungseinrichtungen können Datenpakete an bewegliche Fahrzeuge versendet und/oder von diesen Fahrzeugen versendete Datenpakete empfangen werden. Derartige Datenpakete können beispielsweise Informationen zum Verkehrsfluss, zu Verkehrsstörungen, zur beschränkten Benutzbarkeit von Verkehrswegen abhängig vom Fahrzeuggewicht, Fahrzeugtyp, Fahrzeughöhe oder ähnlichen Parametern oder zu anfallenden Straßenbenutzungsgebühren (Mautgebühren) umfassen.

Ferner sind, beispielsweise aus der Veröffentlichung DE 10 2018 221 933 A1, verteilte Datenaustauschsysteme für Fahrzeuge bekannt, welche einen örtlich ruhenden Zwischenspeicher zum Zwischenspeichern von Daten aufweisen. Ein verteiltes Datenaustauschsystem weist weiterhin eine Sendeeinrichtung in einem ersten Fahrzeug zum Senden der zwischenzuspeichernden Daten an den örtlich ruhenden Zwischenspeicher über eine erste Kurzreichweitenschnittstelle auf, eine Empfangseinrichtung in einem an dem Zwischenspeicher vorbeifahrenden zweiten Fahrzeug zum Empfangen der zwischengespeicherten Daten von dem örtlich ruhenden Zwischenspeicher über eine zweite Kurzreichweitenschnittstelle und einen mit dem Zwischenspeicher verbundenen Prozessor. Der Prozessor ist eingerichtet, die an den Zwischenspeicher gesendeten Daten zu verarbeiten, Umfeldmodelldaten zu erzeugen, die Umfeldmodelldaten in den Zwischenspeicher zu schreiben und an das zweite Fahrzeug zu senden.

Die Druckschrift WO 2021/043841 A1 beschreibt eine Vorrichtung zur Steuerung des Zugriffs auf ein drahtloses Kommunikationsnetzwerk mit einem Zeit-Multiplex-Verfahren. Die Vorrichtung umfasst ein Zeitscheiben-Allokationsmodul, das zur Zuordnung einer Zeitscheibe für die Datenübertragung von einem ersten Knoten zu einem zweiten Knoten eingerichtet ist, sowie ein Validierungsmodul, das zur Validierung eines Datenpakets vor einer Übertragung vom ersten Knoten zum zweiten Knoten basierend auf einer Latenzanforderung für das Datenpaket und basierend auf einer erwarteten Latenz des Datenpakets in Abhängigkeit vom Zeitpunkt der zugeordneten Zeitscheibe eingerichtet ist. Das Validierungsmodul ist zur Unterscheidung von zu übertragenden Datenpaketen und nicht zu übertragenden Datenpaketen vorgesehen. Ferner umfasst die Vorrichtung ein Zeitsteuerungsmodul, das zur zeitlichen Einordnung eines zu übertragenden Datenpakets in die zur Übertragung vom ersten zum zweiten Knoten vorgesehene Zeitscheibe eingerichtet ist.

Die Druckschrift US 2020/0077278 A1 beschreibt ein Verfahren zur Vorhersage einer Dienstequalität für eine Kommunikation zwischen mindesten zwei sich bewegenden Kommunikationspartnern. Die Vorhersage beruht auf mindestens einer verbindungsbasierten Dienstequalitäts-Karte, die in einem verbindungsbasierten Erstellprozess aktualisiert wird.

Die über eine Datenübertragungseinrichtung und/oder von einem ortsfesten Zwischenspeicher von einem bewegten Fahrzeug empfangenen Daten unterliegen hinsichtlich einer maximal zulässigen Latenz (das heißt: einer Verzögerung bis zur Verarbeitung und/oder Anzeige im jeweiligen Fahrzeug) sehr unterschiedlichen Anforderungen. Einige Informationen, beispielsweise allgemeine Informationen zum Straßenzustand oder zu Verkehrsstockungen in einiger Entfernung, sind wenig oder nicht zeitkritisch. Andere Informationen, beispielsweise Warnmeldungen über Katastrophenereignisse wie Tsunamis oder Erdbeben, aber auch Zahlungsaufforderungen im Zusammenhang mit einer Gebührenpflicht für die Straßenbenutzung (Maut), müssen umgehend oder innerhalb einer sehr kurzen Frist verarbeitet und/oder angezeigt werden.

Derartige Datenpakete weisen meist nur einen geringen Umfang auf, der typischerweise zwischen 10 Kilobyte und 100 Kilobyte liegt. Jedoch muss ein Kanal zur Datenübertragung zwischen der ortsfesten Datenübertragungseinrichtung und dem Fahrzeug eine Übertragungsrate aufweisen, die den vollständigen Empfang aller Nutzdaten und aller zur Absicherung des Übertragungsprotokolls erforderlichen Meta- und Sicherungsdaten innerhalb eines Zeitfensters sicherstellt, das durch die maximale Bewegungsgeschwindigkeit des Fahrzeugs und die minimale Reichweite der Datenübertragungseinrichtung stark begrenzt sein kann.

Die daraus resultierende erforderliche Übertragungsrate eines solchen Kanals überschreitet die Bandbreite oder Übertragungsrate, die typischerweise zur Datenübertragung zwischen Komponenten innerhalb eines Fahrzeugs vorgesehen ist, oft erheblich, mitunter um eine oder mehrere Größenordnungen.

Daher war es erforderlich, für den Datenempfang über solche Kanäle ausgelegte Kommunikations-Steuergeräte mit besonderen Datenübertragungsschnittstellen (im Folgenden auch als Gateways bezeichnet) zu versehen, die eine höhere Datenübertragungsrate ermöglichen als üblicherweise in einem Fahrzeug vorgesehen. Solche besonderen Gateways führen einerseits zu höheren Herstellkosten, insbesondere, da sie nicht nur für ein Kommunikations-Steuergerät, sondern auch für andere Komponenten, die derartige, über einen solchen Kanal empfangene Daten verarbeiten und/oder anzeigen sollen, vorzusehen sind.

Darüber hinaus sind Datenübertragungsstrecken mit höherer Bandbreite empfindlicher gegen Störungen insbesondere durch elektromagnetische Interferenzen und stellen somit höhere Anforderungen an die Leitungsführung und an die Montage.

Es besteht daher ein Bedarf an einem Verfahren, mit dem Datenpakete, welche über einen Kanal mit hoher Übertragungsrate empfangen wurden, innerhalb des Fahrzeugs über Datenübertragungsstrecken verteilt werden, die eine im Vergleich zu dem Kanal deutlich geringere Übertragungsrate aufweisen, ohne dass dadurch Anforderungen an eine maximal zulässige Latenz in der Zustellung solcher Datenpakete kompromittiert werden.

Der Erfindung liegt die Aufgabe zu Grunde, ein verbessertes Verfahren zur Übertragung von Datenpaketen in einem Fahrzeug anzugeben. Diese Aufgabe wird erfindungsgemäß durch ein Verfahren mit den Merkmalen des Anspruchs 1 gelöst.

Ferner liegt der Erfindung die Aufgabe zu Grunde, ein verbessertes Kommunikations-Steuergerät für ein Fahrzeug anzugeben. Diese Aufgabe wird erfindungsgemäß mit einem Kommunikations-Steuergerät mit den Merkmalen des Anspruchs 4 gelöst.

Darüber hinaus liegt der Erfindung die Aufgabe zu Grunde, eine verbesserte Anordnung von Komponenten in einem Fahrzeug anzugeben. Diese Aufgabe wird erfindungsgemäß mit einer Anordnung mit den Merkmalen des Anspruchs 6 gelöst.

Vorteilhafte Ausgestaltungen der Erfindung sind Gegenstand der Unteransprüche.

Gemäß einem ersten Aspekt der Erfindung werden bei einem Verfahren zur Übertragung von Datenpaketen innerhalb eines Fahrzeugs, welche von mindestens einer ortsfesten Datenübertragungseinrichtung über mindestens einen Kanal bereitgestellt werden, die Datenpakete von einem Kommunikations-Steuergerät des Fahrzeugs mittels eines für den Empfang über den mindestens einen Kanal eingerichteten Kommunikationsmoduls empfangen und in einem Speicher zwischengespeichert. In einer Ausführungsform werden Datenpakete beim Zwischenspeichern mit einem Zeitstempel versehen, der den Zeitpunkt des Empfangs durch das Kommunikationsmodul angibt.

Für jedes Datenpaket wird eine zulässige Zustelllatenz ermittelt, die angibt, innerhalb welcher Zeitspanne ab dem Empfang des Datenpakets durch das Kommunikationsmodul dieses Datenpaket in dem Fahrzeug verarbeitet und/oder dargestellt, beispielsweise angezeigt werden soll.

Beispielsweise wird Datenpaketen, die auf noch weit vom Fahrzeug entfernte Verkehrsstockungen hinweisen, eine vergleichsweise große Zustelllatenz zugeordnet. Datenpaketen, die auf eine Mautgebühr hinweisen, die zum Befahren einer gebührenpflichtigen Straße zu entrichten ist, wird dagegen eine vergleichsweise niedrige Zustelllatenz zugeordnet. Ebenso wird Datenpaketen, die eine Warnmeldung vor einem Tsunami, einem Erdbeben oder einem Böschungsbrand entlang der unmittelbar vorausliegenden Wegstrecke hinweisen, eine vergleichsweise niedrige Zustelllatenz zugeordnet.

Die Datenpakete werden in einer Reihenfolge an mindestens eine weitere Komponente des Fahrzeugs über mindestens eine Datenübertragungsstrecke übertragen, die für den Datenaustausch mit dem Kommunikations-Steuergerät eingerichtet ist und deren Übertragungsrate kleiner ist als die maximale Übertragungsrate des mindestens einen Kanals zum Empfang von Daten von der mindestens einen ortsfesten Datenübertragungseinrichtung.

Die Reihenfolge der Übertragung der Datenpakete wird so bestimmt, dass die zulässige Zustelllatenz eines jeden Datenpakets eingehalten wird.

Beispielsweise kann aus dem Zeitstempel des Empfangs eines Datenpakets durch das Kommunikationsmodul mittels der Zustelllatenz der spätestmögliche zulässige Zustellzeitpunkt für dieses Datenpaket ermittelt werden, das heißt: der Zeitpunkt, bis zu dem dieses Datenpaket über die Datenübertragungsstrecke an die mindestens eine weitere Komponente übertragen sein muss. Somit können alle zwischengespeicherten Datenpakete nach ihren spätestmöglichen zulässigen Zustellzeitpunkten, beginnend mit dem frühesten (das heißt: dem nächstliegenden) zulässigen Zustellzeitpunkt sortiert und in der Reihenfolge dieser Liste übertragen werden. Auf diese Weise kann bei ausreichender Übertragungsrate der Datenübertragungsstrecke eine zeitlich korrekte Zustellung aller Datenpakete gewährleistet werden.

Mit anderen Worten: die von dem Kommunikations-Steuergerät empfangenen Datenpakete werden zwischengespeichert und für eine Weiterleitung über die Datenübertragungsstrecke derart priorisiert, dass dringend zuzustellende Datenpakete eine hohe Priorität erhalten und weniger dringend zuzustellende Datenpakete eine niedrigere Priorität.

Auf diese Weise können die Daten, die innerhalb des durch die minimale Reichweite der ortsfesten Datenübertragungseinrichtung und die maximale Geschwindigkeit eines Fahrzeugs begrenzten Übertragungszeitfensters von dem Kanal empfangen werden, über einen vergleichsweise längeren Zeitraum an weitere Komponenten in dem Fahrzeug verteilt werden, ohne dass dabei Datenpakete verloren gehen oder Anforderungen hinsichtlich der Zustelllatenzen verletzt werden.

Dadurch ist es möglich, für die mindestens eine Datenübertragungsstrecke innerhalb des Fahrzeugs kostengünstige Gateways mit einer geringeren Übertragungsrate einzusetzen, als dies nach dem Stand der Technik möglich ist. Insbesondere kann auf besonders spezielle, für besonders hohe Übertragungsraten ausgelegte Gateways, beispielsweise auf Universal Serial Bus (USB) Schnittstellen oder auf Controller Area Network Flexible Datarate (CAN-FD) Gateways verzichtet werden.

Zudem wird eine höhere Störsicherheit der mindestens einen Datenübertragungsstrecke erzielt. Ferner können die Anforderungen an die Leitungsführung und an die Montage solcher Datenübertragungsstrecken in dem Fahrzeug entspannt werden.

Bei einer Ausführungsform des Verfahrens umfassen die Daten, die von dem Kommunikations-Steuergerät über die mindestens eine Datenübertragungsstrecke mit kleinerer Übertragungsrate als die maximale Übertragungsrate des mindestens einen Kanals übertragen werden, mindestens teilweise Mautbezahlinformationen.

Indem Datenpaketen, die solche Mautbezahlinformationen umfassen, eine geringe Zustelllatenz und dementsprechend eine hohe Priorität für die Übertragung an die mindestens eine weitere Komponente im Fahrzeug zugeordnet wird, werden diese Daten bevorzugt dargestellt und/oder bearbeitet. Dadurch wird trotz der vergleichsweise (zum Kanal) begrenzten Übertragungsrate des Kommunikations-Steuergeräts eine ordnungsgemäße Abwicklung des Bezahlvorgangs für eine Maut gewährleistet.

Bei einer weiteren Ausführungsform des Verfahrens umfassen die Daten, die von dem Kommunikations-Steuergerät über die mindestens eine Datenübertragungsstrecke mit kleinerer Übertragungsrate als die maximale Übertragungsrate des mindestens einen Kanals übertragen werden, mindestens teilweise dringende Warnmeldungen.

Indem Datenpaketen, die solche dringenden Warnmeldungen umfassen, eine geringe Zustelllatenz und dementsprechend eine hohe Priorität für die Übertragung an die mindestens eine weitere Komponente im Fahrzeug zugeordnet wird, werden diese Warnmeldungen bevorzugt dargestellt und/oder bearbeitet. Dadurch wird trotz der vergleichsweise (zum Kanal) begrenzten Übertragungsrate des Kommunikations-Steuergeräts eine ordnungsgemäße und sichere Benachrichtigung von Fahrzeuginsassen über vorliegende dringende Warnmeldungen gewährleistet.

Gemäß einem zweiten Aspekt der Erfindung umfasst ein Kommunikations-Steuergerät für ein Fahrzeug ein Kommunikationsmodul mit einer Sende-Empfangs-Einrichtung, die für den Empfang von Datenpaketen von einer ortsfesten Datenübertragungseinrichtung über mindestens einen Kanal eingerichtet ist. Erfindungsgemäß umfasst das Kommunikations-Steuergerät darüber hinaus einen Speicher zur Zwischenspeicherung von Datenpaketen, eine Recheneinheit sowie mindestens ein Gateway, das für die Verbindung mit jeweils einer Datenübertragungsstrecke eingerichtet ist, deren Übertragungsrate kleiner ist als die maximale Übertragungsrate des mindestens einen Kanals, wobei das Kommunikations-Steuergerät zur Durchführung des gemäß dem ersten Aspekt der Erfindung beschriebenen Verfahrens zur Übertragung von Datenpaketen innerhalb eines Fahrzeugs eingerichtet ist. Insbesondere sind das Kommunikations-Steuergerät zur Priorisierung und der Speicher zur Zwischenspeicherung von über den Kanal empfangenen Datenpaketen eingerichtet.

Indem die Übertragungsrate des mindestens einen Gateways niedriger gewählt wird als die Übertragungsrate des Kanals, können für den Aufbau eines solchen erfindungsgemäßen Kommunikations-Steuergeräts einfachere und zudem weniger störanfällige Baugruppen eingesetzt werden, insbesondere Gateways, die in der Automobilherstellung weit verbreitet und kostengünstig verfügbar sind. Die übrigen Vorteile des erfindungsgemäßen Kommunikations-Steuergeräts entsprechen denen des erfindungsgemäßen Verfahrens zur Übertragung von Datenpaketen innerhalb eines Fahrzeugs.

In einer Ausführungsform ist das mindestens eine Gateway als Controller Area Network (CAN) Gateway mit einer Übertragungsrate ausgebildet, die niedriger als die maximale Übertragungsrate des mindestens einen Kanals ist. Derartige CAN Gateways sind in der Automobilherstellung besonders weit verbreitet und kostengünstig.

Gemäß einem dritten Aspekt der Erfindung umfasst eine Anordnung von Komponenten, die beispielsweise als Steuergerät, als Infotainment-Komponente oder als Anzeige- und Bediengerät ausgebildet sein können, mindestens eine Komponente, die als Kommunikations-Steuergerät gemäß dem zweiten Aspekt der Erfindung ausgebildet ist und zum Empfang von Datenpaketen von einer ortsfesten Datenübertragungseinrichtung über mindestens einen Kanal eingerichtet ist und mit mindestens einer weiteren Komponente über eine Datenübertragungsstrecke verbunden ist, deren Übertragungsrate kleiner ist als die maximale Übertragungsrate des mindestens einen Kanals.

Die Vorteile einer solchen Anordnung entsprechen den Vorteilen des Verfahrens zur Übertragung von Datenpaketen innerhalb eines Fahrzeugs gemäß dem ersten Aspekt der Erfindung und den Vorteilen des Kommunikations-Steuergeräts gemäß dem zweiten Aspekt der Erfindung.

In einer Ausführungsform ist mindestens eine mit dem Kommunikations-Steuergerät verbundene weitere Komponente als Infotainment-Haupteinheit ausgebildet und zur Bestimmung einer Fahrtroute für das Fahrzeug eingerichtet.

Der Erfindung liegt die Erkenntnis zu Grunde, dass eine solche Infotainment-Haupteinheit in ihrem typischen Arbeitsmodus nur sehr selten dringende Datenpakete mit kurzer Zustelllatenz erhält, beispielsweise Warnmeldungen über Naturkatastrophen oder Mautbezahlinformationen, dagegen vergleichsweise häufiger, aber in dennoch ausreichend großen Zeitabständen wenig zeitkritische oder zeitunkritische Datenpakete mit hoher Zustelllatenz.

Indem mittels des erfindungsgemäßen Verfahrens Datenpakete nach ihrer zulässigen maximalen Zustelllatenz priorisiert und bis zu ihrer Übertragung über die mindestens eine Datenübertragungsstrecke in einem Speicher zwischengespeichert werden, kann die burstartige Datenübertragung mit hoher Datenübertragungsrate auf dem Kanal verstetigt werden. Dadurch ist eine Datenübertragung mit erheblich geringerer Datenübertragungsrate möglich, ohne die Sicherheit oder die Zuverlässigkeit der Infotainment-Haupteinheit zu beeinträchtigen. Weitere Vorteile einer solchen Ausführungsform entsprechen den Vorteilen des Verfahrens zur Übertragung von Datenpaketen innerhalb eines Fahrzeugs gemäß dem ersten Aspekt der Erfindung und den Vorteilen des Kommunikations-Steuergeräts gemäß dem zweiten Aspekt der Erfindung.

Ausführungsbeispiele der Erfindung werden im Folgenden anhand einer Zeichnung näher erläutert.

Dabei zeigt:

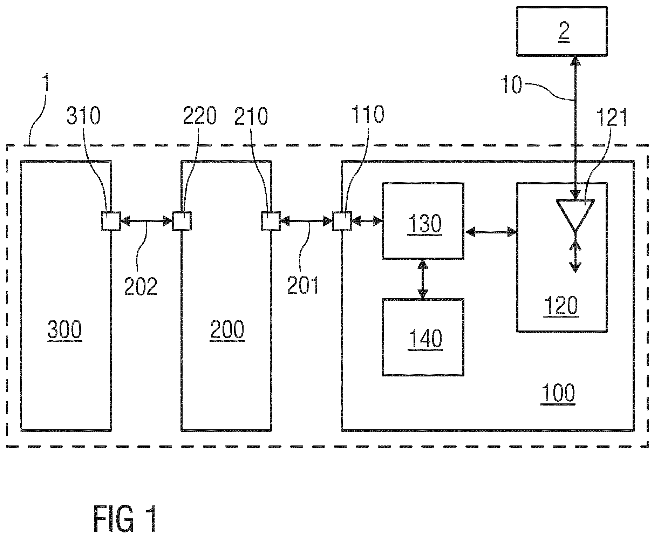

- Fig. 1: schematisch eine ortsfeste Datenübertragungseinrichtung und ein Fahrzeug mit einem Kommunikations-Steuergerät.

Einander entsprechende Teile sind in allen Figuren mit den gleichen Bezugszeichen versehen.

Figur 1 zeigt schematisch ein bewegliches Fahrzeug 1 und eine ortsfeste Datenübertragungseinrichtung 2. Das Fahrzeug 1 umfasst ein Kommunikations-Steuergerät 100, eine Infotainment-Haupteinheit 200 sowie weitere elektrische und/oder elektronische Komponenten, die in Figur 1 rein schematisch in einer Fahrzeugelektronik 300 zusammengefasst sind. Die Infotainment-Haupteinheit 200, die im Folgenden auch als Head Unit 200 bezeichnet wird, ist mit jeweils einer bidirektional ausgelegten Datenübertragungsstrecke 201, 202 zum Austausch von Daten und/oder Steueranweisungen mit dem Kommunikations-Steuergerät 100 beziehungsweise mit der Fahrzeugelektronik 300 verbunden.

Das Fahrzeug 1 und die Datenübertragungseinrichtung 2 sind zum Austausch von Daten über einen Kanal 10 eingerichtet.

Der Kanal 10 kann beispielsweise als unidirektionaler frequenzmodulierter Kanal 10 ausgebildet sein, über den Datenpakete von einer vorzugsweise als terrestrische Sendestation ausgebildeten Datenübertragungseinrichtung 2 ausgesendet und dadurch in der Art eines Rundfunks für den Empfang durch eine Vielzahl von Fahrzeugen 1 bereitgestellt werden. Über einen derartigen frequenzmodulierten Kanal 10 können bei einer typischen Trägerfrequenz von zwischen 76 MHz bis 90 MHz über einen typischen Radius von etwa 10 km bis 50 km hinweg Datenpakete von bis zu 50 Kilobyte mit einer Datenübertragungsrate von etwa 16 Kilobit pro Sekunde übertragen werden.

In einer anderen Ausführungsform kann der Kanal 10 auch als Mikrowellenkanal 10 ausgebildet sein, bei dem Datenpakete von bis zu 25 Kilobyte über eine Trägerfrequenz von typischerweise 5,8 GHz mit einer Datenübertragungsrate von etwa 4 Megabit pro Sekunde übertragen werden. Bei einer solchen Ausführungsform ist die Datenübertragungsstation 2 als ortsfeste Mikrowellenbake ausgebildet, die eine typische Reichweite von bis zu 20 Metern aufweist und die üblicherweise entlang von Verkehrswegen mit hohem Verkehrsaufkommen wie Autobahnen und Schnellstraßen installiert ist.

In einer weiteren Ausführungsform kann der Kanal 10 auch als Infrarotkanal 10 ausgebildet sein, bei dem Datenpakete von bis zu 10 Kilobyte über eine optische Verbindung zwischen dem Fahrzeug 1 und einer als Infrarotbake ausgebildeten Datenübertragungsstation 2 übertragen werden. Derartige Infrarotbaken weisen typischerweise eine Reichweite von bis zu 3,5 Metern auf und sind für Datenübertragungsraten von bis zu 1 Megabit pro Sekunde von der Infrarotbake zum Fahrzeug 1 (Downlink) und von bis zu 64 Kilobit pro Sekunde vom Fahrzeug 1 zur Infrarotbake (Uplink) eingerichtet und entlang von Verkehrswegen mit normalem oder niedrigem Verkehrsaufkommen installiert.

Zur vereinfachten Darstellung ist in Figur 1 nur ein Kanal 10 dargestellt, jedoch ist ein Fahrzeug 1 üblicherweise zum Datenaustausch mit verschiedenen ortsfesten Datenübertragungseinrichtungen 2 eingerichtet, der über mehrere verschieden ausgebildete Kanäle 10 erfolgen kann.

Die fahrzeugseitig vorgesehene Infotainment-Haupteinheit oder Head Unit 200 verarbeitet über den Kanal 10 übertragene Daten und/oder stellt solche Daten zur Übertragung bereit.

Beispielsweise ist die Head Unit 200 unter anderem für das Routing, das heißt: für die Berechnung einer Fahrtroute des Fahrzeugs 1 anhand von Positionsdaten und Kartendaten eingerichtet. Für ein solches Routing können Verkehrsdaten berücksichtigt werden, die über mindestens einen Kanal 10 bereitgestellt werden. Verkehrsdaten können Informationen über den Verkehrsfluss und/oder die Verkehrsführung umfassen, beispielsweise über aktuelle Sperrungen, Staus oder andere Einschränkungen entlang von Verkehrswegen, die für das Routing relevant sind. Die Darstellung und Verarbeitung von Verkehrsdaten durch die Head Unit 200 ist im Allgemeinen nicht zeitkritisch.

Darüber hinaus kann eine Head Unit 200 für die Fahrzeuginsassen wichtige Informationen anzeigen, beispielsweise Warnungen vor Unwettern oder Katastrophensituationen entlang der Fahrtroute, die ebenfalls über einen oder mehrere Kanäle 10 von ortsfesten Datenübertragungseinrichtungen 2 bereitgestellt werden.

Ferner kann eine Head Unit 200 wichtige Informationen darstellen und/oder verarbeiten, die sich auf einen konkreten, aktuell vom Fahrzeug 1 gerade befahrenen Verkehrsweg beziehen, beispielsweise Informationen über eine Mautpflicht (das heißt: Angabe eines für die Benutzung eines Straßenabschnitts unmittelbar zu entrichtenden Geldbetrags), eine Information über eine Höhenbegrenzung oder einer begrenzten Tonnage beispielsweise beim Befahren einer Fähre, eines Tunnels, einer Brücke, oder eines anderen Verkehrsbauwerks.

Derartige Informationen, die hier lediglich beispielhaft und keineswegs abschließend aufgezählt werden, können ebenfalls über ortsfeste Datenübertragungseinrichtungen 2 bereitgestellt werden. Solche Informationen können eine unmittelbare Reaktion durch die Head Unit 200 oder eine andere Komponente der Fahrzeugelektronik 300 und/oder durch einen Fahrzeuginsassen des Fahrzeugs 1 erfordern.

Der Erfindung liegt somit die Erkenntnis zugrunde, dass verschiedene, über einen oder mehrere Kanäle 10 von einem Fahrzeug 1 empfangene Daten mit unterschiedlicher zeitlicher Dringlichkeit oder Priorität zu verarbeiten sind. Einige dieser Daten sind mit harten Echtzeitanforderungen verbunden und müssen innerhalb einer vorbestimmten Zeitspanne oder zulässigen Zustelllatenz, gerechnet ab dem Empfang durch das Fahrzeug 1, verarbeitet und/oder einem Fahrzeuginsassen dargestellt werden. Andere Daten sind mit weichen Echtzeitanforderungen verbunden, das heißt: sie müssen im statistischen Mittel innerhalb einer bestimmten Zeitspanne verarbeitet und/oder dargestellt werden, jedoch kann diese Zeitspanne in ausreichend seltenen Einzelfällen auch überschritten werden. Weitere Daten sind ohne besondere zeitliche Anforderungen zu verarbeiten und/oder darzustellen.

Aus dieser Erkenntnis leitet die Erfindung die Aufgabe ab, die Übertragung, Speicherung und Verarbeitung von solchen, über einen oder mehrere Kanäle 10 empfangenen Daten in dem Fahrzeug 1 so zu organisieren, dass mit besonders geringem technischen Aufwand alle zeitlichen Anforderungen eingehalten werden und keine Daten verloren gehen.

Hierzu wird für den Datenaustausch über den mindestens einen Kanal 10 in dem Kommunikations-Steuergerät 100 ein Kommunikationsmodul 120 mit mindestens einer Sende-Empfangs-Einrichtung 121 vorgesehen. So kann beispielsweise eine erste Sende-Empfangs-Einrichtung 121 als Ultrakurzwellenempfänger für den Empfang von Daten über einen frequenzmodulierten Kanal 10, eine zweite Sende-Empfangs-Einrichtung 121 als Mikrowellenempfänger für den Empfang von Daten über einen Mikrowellenkanal 10 und eine dritte Sende-Empfangs-Einrichtung 121 als bidirektional arbeitender Infrarot-Sender-Empfänger für den Empfang und das Senden von Daten über einen Infrarotkanal 10 eingerichtet sein.

Das Kommunikations-Steuergerät 100 umfasst ferner eine Recheneinheit 130 sowie einen Speicher 140. Die Recheneinheit 130 ist mit dem Kommunikationsmodul 120 und dem Speicher 140 derart verbunden, dass Daten zwischen der Recheneinheit 130 und dem Kommunikationsmodul 120 übertragen sowie auf dem Speicher 140 abgelegt und/oder von diesem gelesen werden können.

Im vorliegend dargestellten Ausführungsbeispiel ist der Speicher 140 als von der Recheneinheit 130 getrenntes Element, beispielsweise als separates Speichermodul ausgebildet. Dadurch ist es leicht möglich, ein Kommunikations-Steuergerät 100 in verschiedenen Konfigurationen herzustellen, die durch unterschiedlich ausgebildete Speicher 140 beispielsweise von unterschiedlicher Speicherkapazität und/oder Transferrate auf unterschiedliche Anforderungen angepasst sind.

Alternativ kann der Speicher 140 aber auch als Teilelement der Recheneinheit 130 ausgebildet sein. Dadurch kann beispielsweise eine höhere Transferrate für das Lesen und Schreiben von Daten auf dem Speicher 140 erzielt werden.

Vom Kommunikationsmodul 120 über einen Kanal 10 empfangene Daten werden an die Recheneinheit 130 übertragen. Erfindungsgemäß ist die Recheneinheit 130, bevorzugt mittels eines darauf implementierten Rechenprogramms, dafür eingerichtet, die maximal zulässige Zustelllatenz (und damit auch die Priorität für eine Übertragung an weitere Komponenten 200, 300 in dem Fahrzeug 1) solcher empfangenen Daten zu ermitteln. Mit anderen Worten: die Recheneinheit 130 sortiert diese Daten in einer Reihenfolge, in der sie an die Head Unit 200 zu übertragen sind, und zwar derart, dass die zeitlichen Anforderungen bezüglich der Darstellung und/oder Verarbeitung aller dieser Daten erfüllt werden.

Daten, welche nicht unmittelbar (das heißt: mit höchster Priorität) an die Head Unit 200 zu übertragen sind, werden in dem Speicher 140 zwischengespeichert und von dort erst dann gelesen und übertragen, wenn die Übertragung höher priorisierter Daten abgeschlossen wurde. Nachdem die Daten übertragen wurden, können sie aus dem Speicher 140 wieder gelöscht werden, um Platz für nachfolgend zwischenzuspeichernde Daten zu schaffen.

Auf diese Weise kann die Einhaltung aller auf die Daten eines Kanals 10 bezogenen Zeitanforderungen auch dann eingehalten werden, wenn die Datenübertragungsstrecke 201 zwischen dem Kommunikations-Steuergerät 100 und der Head Unit 200 nur eine geringe Transferrate aufweist. Insbesondere kann diese Datenübertragungsstrecke 201 eine sehr viel geringere Transferrate aufweisen, als sie für eine Übertragung aller von einem Kanal 10 empfangenen Daten in der Reihenfolge ihres Empfangens durch das Kommunikationsmodul 120 (das heißt: ohne eine Sortierung und Zwischenspeicherung entsprechend ihrer zeitlichen Priorität) notwendig wäre.

Mit anderen Worten: die Leistungsanforderungen an die Datenübertragungsstrecke 201 können dadurch entspannt werden, dass die zwar burstartig mit hoher Übertragungsrate, jedoch in geringer Paketgröße und in ausreichend (bezogen auf die Burstdauer oder effektive Belegungsdauer des Kanals 10) von einer Datenübertragungseinrichtung 2 übertragenen Daten im Speicher 140 des Kommunikations-Steuergeräts 100 gepuffert und nach ihren Latenzanforderungen priorisiert an die Head Unit 200 übertragen werden.

In einer Ausführungsform wird die Datenübertragungsstrecke 201 zwischen der Head Unit 200 und dem Kommunikations-Steuergerät 100 durch miteinander verbundene, einfache und kostengünstige Controller Area Network (CAN) Gateways 210, 110 gebildet. In vorteilhafter Weise entfällt dadurch die Notwendigkeit, Gateways mit einer höheren Übertragungsrate einzusetzen, beispielsweise CAN Flexible Datarate (CAN-FD) Gateways. Ebenso entfällt die Notwendigkeit, zusätzlich oder alternativ weitere Schnittstellen, beispielsweise Universal Serial Bus (USB) Schnittstellen zwischen dem Kommunikations-Steuergerät 100 und der Head Unit 200 vorzusehen. Dadurch ist ein einfacheres und kostengünstigeres Design sowohl des Kommunikations-Steuergeräts 100 als auch der Head Unit 200 möglich. Auch die Gestaltung und Montage von Kabeln oder Kabelsätzen zur Verbindung des Kommunikations-Steuergeräts 100 und der Head Unit 200 kann vereinfacht werden. Zudem sinkt durch diese vereinfachte Gestaltung auch das Risiko eines Ausfalls der Datenübertragungsstrecke 201.

In analoger Weise können Leistungsanforderungen für die weitere Übermittlung von Daten, welche ursprünglich von einem Kanal 10 empfangen und an die Head Unit 200 übertragen wurden, an Komponenten der Fahrzeugelektronik 300 entspannt werden. Somit kann auch die Datenübertragungsstrecke 202 zwischen der Fahrzeugelektronik 300 und der Head Unit 200 durch kostengünstige einfache CAN Gateways 310, 220 gebildet werden. Aufwändigere, teurere und ausfallanfälligere CAN-FD Gateways oder USB Schnittstellen können auch hier entfallen.

## Patentansprüche

1. Verfahren zur Übertragung von durch mindestens eine ortsfeste Datenübertragungseinrichtung (2) über mindestens einen Kanal (10) bereitgestellten Datenpaketen in einem Fahrzeug (1),
**dadurch gekennzeichnet, dass**
die Datenpakete von einem Kommunikations-Steuergerät (100) mittels eines für den Empfang über den mindestens einen Kanal (10) eingerichteten Kommunikationsmoduls (120) empfangen und in einem Speicher (140) zwischengespeichert werden,
wobei für jedes Datenpaket eine zulässige Zustelllatenz ermittelt wird, die angibt, innerhalb welcher Zeitspanne ab dem Empfang des Datenpakets durch das Kommunikationsmodul (120) dieses Datenpaket in dem Fahrzeug (1) verarbeitet und/oder dargestellt werden soll und wobei die Datenpakete in einer Reihenfolge an mindestens eine weitere Komponente (200, 300) des Fahrzeugs (1) über mindestens eine Datenübertragungsstrecke (201, 202) übertragen werden, deren Übertragungsrate kleiner ist als die maximale Übertragungsrate des mindestens einen Kanals (10),
wobei die Reihenfolge der Übertragung der Datenpakete so bestimmt wird, dass die zulässige Zustelllatenz eines jeden Datenpakets eingehalten wird.

2. Verfahren nach Anspruch 1,
**dadurch gekennzeichnet, dass**
die über die mindestens eine Übertragungsstrecke (201, 202) übertragenen Daten mindestens teilweise Mautbezahlinformationen umfassen.

3. Verfahren nach einem der vorhergehenden Ansprüche,
**dadurch gekennzeichnet, dass**
die über die mindestens eine Übertragungsstrecke (201, 202) übertragenen Daten mindestens teilweise mindestens eine dringende Warnmeldung umfassen.

4. Kommunikations-Steuergerät (100) für ein Fahrzeug (1) umfassend ein Kommunikationsmodul (120) mit einer Sende-Empfangs-Einrichtung (121), die für den Empfang von Datenpaketen von einer ortsfesten Datenübertragungseinrichtung (2) über mindestens einen Kanal (10) eingerichtet ist,
**dadurch gekennzeichnet, dass**
das Kommunikations-Steuergerät (100) einen Speicher (140) zur Zwischenspeicherung von Datenpaketen, eine Recheneinheit (130) und mindestens ein Gateway (110) für die Verbindung mit jeweils einer Datenübertragungsstrecke (201) umfasst, deren Übertragungsrate kleiner als die maximale Übertragungsrate des mindestens einen Kanals (10) ist und wobei das Kommunikations-Steuergerät (100) zur Durchführung des Verfahrens nach einem der Ansprüche 1 bis 3 eingerichtet ist.

5. Kommunikations-Steuergerät (100) nach Anspruch 4,
**dadurch gekennzeichnet, dass**
das mindestens ein Gateway (110) als Controller Area Network (CAN) Gateway mit einer Übertragungsrate ausgebildet ist, die niedriger als die maximale Übertragungsrate des mindestens einen Kanals (10) ist.

6. Anordnung von Komponenten (100, 200, 300) in einem Fahrzeug (1),
**dadurch gekennzeichnet, dass**
mindestens eine Komponente (100, 200, 300) als Kommunikations-Steuergerät (100) nach Anspruch 4 oder 5 zum Empfang von Datenpaketen von einer ortsfesten Datenübertragungseinrichtung (2) über mindestens einen Kanal (10) ausgebildet und mit mindestens einer weiteren Komponente (200, 300) über eine Datenübertragungsstrecke (201, 202) verbunden ist, deren Übertragungsrate kleiner als die maximale Übertragungsrate des mindestens einen Kanals (10) ist.

7. Anordnung nach Anspruch 6,
**dadurch gekennzeichnet, dass**
mindestens eine Komponente (100, 200, 300) als Infotainment-Haupteinheit (200) ausgebildet und zur Bestimmung einer Fahrtroute für das Fahrzeug (1) eingerichtet ist.

## Claims

1. Method for transmitting data packets provided by at least one stationary data transmission device (2) via at least one channel (10) in a vehicle (1),
**characterized in that**
the data packets are received by a communication control unit (100) by means of a communication module (120) configured for reception via the at least one channel (10), and the data packets are temporarily stored in a memory (140),
a permissible delivery latency being determined for each data packet, which indicates the time period, from the receipt of the data packet by the communication module (120), within which this data packet is to be processed and/or displayed in the vehicle (1), and the data packets being transmitted in a sequence to at least one further component (200, 300) of the vehicle (1) via at least one data transmission path (201, 202), the transmission rate of which is lower than the maximum transmission rate of the at least one channel (10),
the sequence of the transmission of the data packets being determined in such a way that the permissible delivery latency of each data packet is adhered to.

2. Method according to claim 1,
**characterized in that**
the data transmitted via the at least one transmission path (201, 202) at least partially comprise toll payment information.

3. Method according to any of the preceding claims,
**characterized in that**
the data transmitted via the at least one transmission path (201, 202) at least partially comprise at least one urgent warning message.

4. Communication control unit (100) for a vehicle (1), comprising a communication module (120) which has a transceiver device (121) configured to receive data packets from a stationary data transmission device (2) via at least one channel (10),
**characterized in that**
the communication control unit (100) comprises a memory (140) for temporarily storing data packets, a computing unit (130), and at least one gateway (110) for connecting to a data transmission path (201) in each case, the transmission rate of which data transmission path is lower than the maximum transmission rate of the at least one channel (10), and the communication control unit (100) being configured to carry out the method according to any of claims 1 to 3.

5. Communication control unit (100) according to claim 4,
**characterized in that**
the at least one gateway (110) is designed as a Controller Area Network (CAN) gateway which has a transmission rate that is lower than the maximum transmission rate of the at least one channel (10).

6. Arrangement of components (100, 200, 300) in a vehicle (1),
**characterized in that**
at least one component (100, 200, 300) is designed as a communication control unit (100) according to claim 4 or claim 5 for receiving data packets from a stationary data transmission device (2) via at least one channel (10), and the at least one component is connected to at least one further component (200, 300) via a data transmission path (201, 202), the transmission rate of which is lower than the maximum transmission rate of the at least one channel (10).

7. Arrangement according to claim 6,
**characterized in that**
at least one component (100, 200, 300) is designed as an infotainment main unit (200) and is configured to determine a travel route for the vehicle (1).

## Revendications

1. Procédé de transmission de paquets de données fournis par au moins un dispositif de transmission de données (2) fixe par l'intermédiaire d'au moins un canal (10) dans un véhicule (1),
**caractérisé en ce que**
les paquets de données sont reçus par un appareil de commande de communication (100) au moyen d'un module de communication (120) aménagé pour la réception par l'intermédiaire de l'au moins un canal (10) et sont stockés temporairement dans une mémoire (140),
dans lequel une latence de livraison admissible est déterminée pour chaque paquet de données, laquelle indique dans quel laps de temps à partir de la réception du paquet de données par le module de communication (120) ledit paquet de données doit être traité et/ou représenté dans le véhicule (1) et dans lequel les paquets de données sont transmis dans un ordre à au moins un autre composant (200, 300) du véhicule (1) par l'intermédiaire d'au moins une voie de transmission de données (201, 202) dont le débit de transmission est inférieur au débit de transmission maximal de l'au moins un canal (10),
dans lequel l'ordre de transmission des paquets de données est déterminé de manière à respecter la latence de livraison admissible de chaque paquet de données.

2. Procédé selon la revendication 1,
**caractérisé en ce que**
les données transmises par l'intermédiaire de l'au moins une voie de transmission (201, 202) comprennent au moins partiellement des informations de paiement de péage.

3. Procédé selon l'une des revendications précédentes,
**caractérisé en ce que**
les données transmises par l'intermédiaire de l'au moins une voie de transmission (201, 202) comprennent au moins partiellement au moins un message d'alerte urgent.

4. Appareil de commande de communication (100) pour un véhicule (1) comprenant un module de communication (120) comportant un dispositif d'émission-réception (121) qui est aménagé pour la réception de paquets de données d'un dispositif de transmission de données (2) fixe par l'intermédiaire d'au moins un canal (10),
**caractérisé en ce que**
l'appareil de commande de communication (100) comprend une mémoire (140) pour le stockage intermédiaire de paquets de données, une unité de calcul (130) et au moins une passerelle (110) pour la liaison avec respectivement une voie de transmission de données (201) dont le débit de transmission est inférieur au débit de transmission maximal de l'au moins un canal (10) et dans lequel l'appareil de commande de communication (100) est aménagé pour la mise en œuvre du procédé selon l'une des revendications 1 à 3.

5. Appareil de commande de communication (100) selon la revendication 4,
**caractérisé en ce que**
l'au moins une passerelle (110) est conçue comme une passerelle CAN (Controller Area Network) avec un débit de transmission qui est plus faible que le débit de transmission maximal de l'au moins un canal (10).

6. Agencement de composants (100, 200, 300) dans un véhicule (1),
**caractérisé en ce que**
au moins un composant (100, 200, 300) est conçu comme un appareil de commande de communication (100) selon la revendication 4 ou 5 pour la réception de paquets de données d'un dispositif de transmission de données (2) fixe par l'intermédiaire d'au moins un canal (10) et est relié à au moins un autre composant (200, 300) par l'intermédiaire d'une voie de transmission de données (201, 202) dont le débit de transmission est inférieur au débit de transmission maximal de l'au moins un canal (10).

7. Agencement selon la revendication 6,
**caractérisé en ce que**
au moins un composant (100, 200, 300) est conçu comme une unité principale d'infodivertissement (200) et est aménagé pour la détermination d'un itinéraire pour le véhicule (1).
